# EUROPEAN PATENT SPECIFICATION

(11) **EP 0 609 238 B1**
(45) Date of publication and mention of the grant of the patent: **08.05.1996**
(21) Application number: 92919704.4
(22) Date of filing: 09.09.1992
(51) Int. Cl.: B08B 15/04

(54) **TELESCOPING DEVICE**
TELESKOPISCHES GERÄT
DISPOSITIF TELESCOPIQUE

(30) Priority: 11.09.1991 SE 9102620
(43) Date of publication of application: 10.08.1994
(73) Proprietor: FUMEX AB, S-931 36 Skelleftea (SE)
(72) Inventor: LUNDSTRÖM, Barry, S-931 52 Skellefte (SE)
(74) Representative: Onn, Thorsten
(86) International application number: SE9200622
(87) International publication number: WO9304791

(56) References cited:
- WO-A-85/00764
- FR-A- 2 048 602
- US-A- 0 653 384

## Description

The present invention relates to a telescopic device for inclusion in a suction line of a suction arrangement intended for the extraction of gases or other environmentally hazardous gases from at least one working or contaminated area, for instance from the exhaust pipe of a motor vehicle, a welding location or some other work place in which environmentally-harmful and/or health-hazardous gases may be generated in one form or another. The suction line is connected to a central suction gas extraction plant or to a gas extractor fan.

Gas extractors are used in car workshops, car inspection localities and car repair shops, which may be intended for other types of automotive vehicles than cars, lorries and buses, for instance such vehicles as tractors, forestry machines and agriculture machines, for extracting by suction exhaust gases from the vehicle engine while test-running the same and/or when bench-testing engines indoors. Extractors can also be used in workshops and laboratories for removing by suction environmentally-harmful gases and vapours generated in work areas in such localities, for instance welding gases from welding shops and gases arising from cutting machines. These extractors normally include a flexible suction hose having fitted to one end thereof a suction nozzle or device by means of which the hose can be connected to the exhaust pipe of a combustion engine vehicle or to a collecting box or the like mounted above a working place. In order to be able to connect the hose to the exhaust pipe of a vehicle, it is necessary for the hose extension that carries the hose connector to have a given length, the greater the length of the suction hose, the greater the range of the extractor arrangement. When the extractor is not in use, it must be possible to remove the suction hose in some way or the other, so that the hose will not remain hanging with part of the hose possibly lying on the floor and constituting an obstacle to some other activity in the workshop or locality concerned.

It is known that this problem can be avoided by reeling the suction hose onto a ceiling-mounted or wall-mounted drum from which requisite lengths of hose can be reeled off and connected to the exhaust pipe of a vehicle. These drums are normally provided with a so-called spring return, i.e. are fitted with a powerful spring which when unreeling the hose from the drum is tension to such an extent that it is able to rotate the drum automatically in a direction in which the withdrawn length of hose is automatically reeled onto the drum after use. However, in order to enable a withdrawn length of hose to be reeled automatically back onto the drum after use, it is necessary to provide this type of extractor or suction arrangement with a very powerful spring, meaning that a very high force must be applied manually to the hose in order to unwind the hose from the drum, particularly if all of the hose is to be unwound. Furthermore, if the hose is not unreeled to its full extent, since it is seldom that the full hose length is required, the increased resistance to flow created by length of hose that remains coiled on the drum will impair the suction ability of the extractor arrangement.

Because of these drawbacks among other things, this type of exhaust-gas extractor has become less and less popular and has, to a large extent, been replaced with extractor arrangements in which the actual suction hose is extendable and retractable from within a tubular housing which is either hung from a main suction line or is carried by a substantially horizontal, wall-mounted and pivotal carrier bar and is connected to a suction fan or to a main suction line that forms part of a central gas extraction system. The inner end of the suction hose located within the tubular housing is sealed with the aid of a piston-like sealing device so that when the connector device is closed and suction is applied, the hose will be subjected to a subpressure which effectively assists in retracting the withdrawn length of hose to a predetermined position within the tubular housing at which the hose will constitute no obstacle to any other activity. In order to achieve a requisite subpressure for drawing the hose into the tubular housing, it is necessary to provide the hose connector or hose nozzle with a sealing cap or a throttle means which will function to seal the hose connector when the connector is disconnected from an exhaust pipe, this hose-connector or nozzle covering creating the subpressure required to retract the suction hose into its tubular housing.

The aforesaid telescopic principle has been found both simple and reliable for removing the hose connector means or the suction nozzle from the actual work place, and has consequently been used to an ever-increasing extent within the field in question, see eg. WO-A-8500764. Hitherto, there has normally been used a steel tube as an outer part and a flexible hose as an inner part of a telescopic device, and it is known to use a subpressure or a spring for returning the inner part of the telescopic device into its outer part. Despite various attempts, no success has been met with hitherto in producing a well-functioning telescopic suction extractor whose telescoping parts can all be made of tubing. The reason for this is primarily because of the lack of success in achieving satisfactory stability between the different components of the telescopic device and in achieving self-locking of said components in a simple fashion, such that the telescopic device will remain stably in an extended and a collapsed state.

Consequently, the object of the present invention is to provide a solution to this problem and therewith provide telescopic exhaust-gas extractors which include two or more telescoping tubes. This object is achieved with the inventive device having the features set forth in the following Claims.

The present invention will now be described in more detail with reference to an exemplifying embodiment thereof and also with reference to the accompanying drawings, in which:
Figure 1 illustrates an inventive telescopic device in perspective;
Figure 2 illustrates in perspective and partly in section a slide bearing for mounting one telescopic part in its outer part; and
Figure 3 illustrates a further application of the inventive telescopic device.

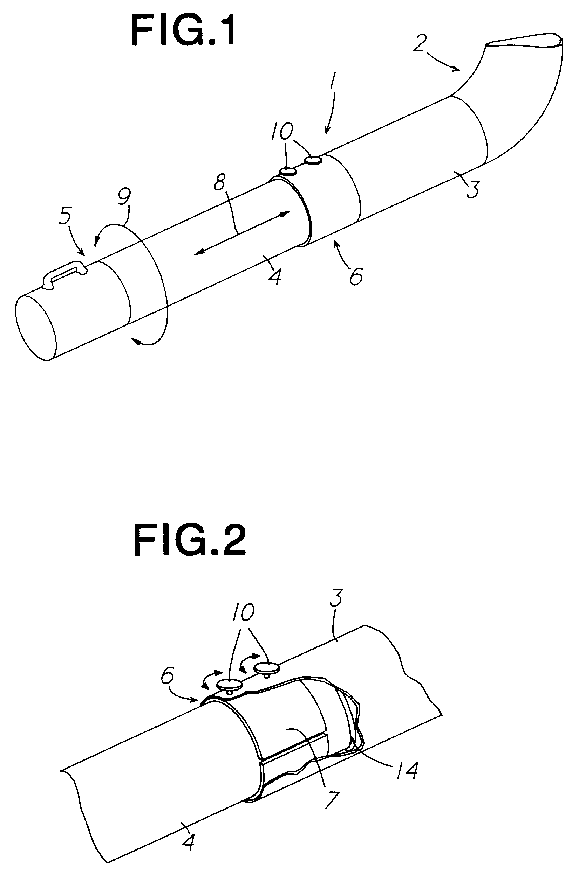

Figure 1 illustrates an inventive telescopic device, identified generally by reference 1, which may be incorporated in or form a part of or form the actual suction line of an extractor arrangement for extracting by suction exhaust gases or other environmentally-harmful gases from at least one work place, wherein the extractor suction line is connected, in a known manner, to a central extractor plant or to a suction fan, although not shown in the drawings. Only a part 2 of an extractor suction line connected to a central extractor plant or to a suction fan is shown in the drawings.

The illustrated embodiments of the inventive telescopic device include an outer tube 3 which is shown to be a continuation of the suction line 2, and an inner tube 4 which is mounted for movement in the outer tube 3 and which has a connector means 5 or suction nozzle mounted on its outer end. The outer tube 3 and the inner tube 4 may both be made of steel tubing, sheet-metal tubing or plastic tubing.

In order to enable the inner tube to be moved axially in relation to the outer tube 3, the outer orifice or outer end 6 of the outer tube 3 is provided internally with a slide-bearing bushing 7 which is made of a low-friction material, such as a plastic or metal. The bushing 7 is slotted along the whole of its length and is anchored in relation to the outer tube 3 in some appropriate manner.

That part of the telescopic device which can be moved axially in relation to the tube 3, i.e. the inner tube 4, is supported for both axial movement, as shown by the double arrow 8, and rotary movement, as shown by a double arrow 9, by said bushing 7, and will preferably therefore have an axial extension such as to ensure that the tube will not stick or jam when the inner tube is fully extended. So that desired friction can be obtained between the inner tube 4 and its bushing 7, the bushing can be adjusted with the aid of a number of screws 10, since greater parts of the bushing 7 are loosely disposed in relation to the outer tube 3. Thus, when screwing-in the adjuster screws 10, those parts of the bushing which are loose in relation to the outer tube 3 can be urged by screws 10 inwards against the inner tube 4, therewith also changing, i.e. increasing, the frictional forces that act between the bushing 7 and the inner tube 4. This enables the friction forces acting between the bushing 7 and the inner tube 4 to be adapted so that the inner tube 4 will remain stable in a fully or partially extended position, even when the telescopic device extends vertically in use. The inner tube 4 is provided at its inner end with a stop flange 14 which will prevent the inner tube 4 from being withdrawn through the bushing 7.

The bushing 7 may have the form of a sleeve and may be a one-piece structure, as illustrated with the exemplifying embodiment of the present invention. Those parts of the bushing which face away from the screws 10 may be affixed to the outer tube 3 as by gluing or in some other known way. Alternatively, the bushing 7 may comprise two halves of which one is connected to the outer tube 3 and the other is connected solely by the adjuster screws 10.

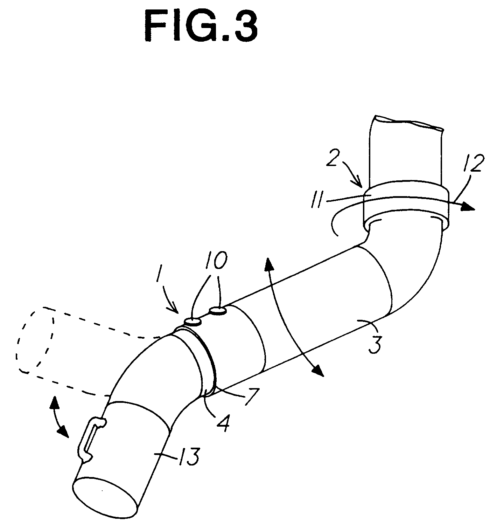

Figure 3 illustrates an embodiment in which the suction hose includes a swivel 11 by means of which the inventive telescopic suction device can be swung through 360° in the horizontal plane, as indicated by an arrow 12, and with which the inventive telescopic device is provided with a moveable or fixed hose connector or nozzle 13.

It will be understood that the present invention is not restricted to the aforedescribed and illustrated embodiments and that changes and modifications can be made within the scope of the invention as defined by the following Claims.

## Claims

1. A telescopic device which forms part of a suction line which is included in a suction extractor arrangement for extracting exhaust gases or other environmentally-harmful gases from at least one working place or area, said suction line being connected to a central extractor plant or to a fan, wherein the telescopic device includes at least two tubes (3, 4) which can be moved axially in relation to one another, i.e. an outer tube (3) and an inner tube (4), and which form the suction line (2) or a part thereof, and wherein the inner tube (4) which is mounted for movement within the outer tube (3) is carried by a slide journal bushing (7) provided in the outer tube, the bushing having parts which are moveable inwardly in relation to the outer thereby tube (3) and which are thereby capable of being brought into abutment with the inner tube (4) so as to adjust the frictional forces acting between the bushing (7) and the inner tube (4), and means (10) being provided for effecting said inward movement.

2. A device according to Claim 1, **characterized** in that the bushing (7) is made of a low-friction material, such as plastic or metal.

3. A device according to Claim 1 or 2, **characterized** in that the bushing (7) is sleeve-shaped and slotted along the whole of its length.

4. A device according to Claim 1 or 2, **characterized** in that the bushing (7) is comprised of two halves, of which one is connected to the outer tube (3).

5. A device according to any one of the preceding Claims, **characterized** in that the device includes one and preferably several adjuster screws (10) which are disposed at the outer end (6) of the outer tube and which function to bring the bushing (7) into engagement with the inner tube (4).

## Patentansprüche

1. Teleskopische Vorrichtung, welche einen Teil einer Saugleitung bildet, welche einer Saugabzugsanordnung zum Abziehen von Abgasen oder anderen umweltschädlichen Gasen von wenigstens einem Arbeitsplatz oder -bereich zugehört, wobei die Saugleitung mit einer zentralen Abzugsanlage oder mit einem Ventilator verbunden ist, wobei die teleskopische Vorrichtung wenigstens zwei Rohre (3, 4) umfaßt, welche axial relativ zueinander bewegt werden können, d.h. ein Außenrohr (3) und ein Innenrohr (4), und welche die Saugleitung (2) oder einen Teil davon bilden, und wobei das Innenrohr (4), welches zur Bewegung innerhalb des Außenrohrs (3) gehalten ist, durch eine in dem Außenrohr vorgesehene Gleitlagerbuchse (7) getragen ist, wobei die Buchse Teile aufweist, welche bezüglich des Außenrohrs (3) nach einwärts bewegbar sind und welche dadurch in Anlage an das Innenrohr (4) bringbar sind, um die zwischen der Buchse (7) und dem Innenrohr (4) wirkenden Reibungskräfte einzustellen, und wobei Mittel (10) vorgesehen sind, um diese Einwärtsbewegung zu bewirken.

2. Vorrichtung nach Anspruch 1, dadurch gekennzeichnet, daß die Buchse (7) aus einem reibungsarmen Material, wie etwa Kunststoff oder Metall, hergestellt ist.

3. Vorrichtung nach Anspruch 1 oder 2, dadurch gekennzeichnet, daß die Buchse (7) hülsenförmig ist und entlang ihrer gesamten Länge geschlitzt ist.

4. Vorrichtung nach Anspruch 1 oder 2, dadurch gekennzeichnet, daß die Buchse (7) zwei Hälften aufweist, von welchen eine mit dem Außenrohr (3) verbunden ist.

5. Vorrichtung nach einem der vorangehenden Ansprüche, dadurch gekennzeichnet, daß die Vorrichtung eine und bevorzugterweise mehrere Einstellschrauben (10) aufweist, welche an dem äußeren Ende (6) des Außenrohrs angeordnet sind und welche dahingehend wirken, die Buchse (7) in Eingriff mit dem Innenrohr (4) zu bringen.

## Revendications

1. Dispositif télescopique faisant partie d'une conduite d'aspiration qui est incluse dans un agencement d'extracteur par aspiration destiné à extraire des gaz d'échappement ou d'autres gaz nocifs pour l'environnement depuis au moins un emplacement de travail ou une zone de travail, ladite conduite d'aspiration étant reliée à une installation d'extracteur principale ou à un ventilateur, le dispositif télescopique comprenant au moins deux tubes (3, 4) qui peuvent être déplacés axialement l'un par rapport à l'autre, c'est-à-dire un tube externe (3) et un tube interne (4), et qui forment la conduite d'aspiration (2) ou une partie de celle-ci, et le tube interne (4) qui est monté de manière à se déplacer à l'intérieur du tube externe (3) étant porté par une douille (7) de coulissement et de rotation placée dans le tube externe, la douille possédant des parties qui sont mobiles intérieurement par rapport au tube externe (3) et qui sont ainsi capables d'être amenées en butée avec le tube interne (4) de manière à régler les forces de frottement agissant entre la douille (7) et le tube interne (4), et des moyens (10) étant prévus pour réaliser ledit mouvement intérieur.

2. Dispositif selon la revendication 1, caractérisé en ce que la douille (7) est réalisée en un matériau à faible coefficient de frottement, tel que des matières plastiques ou du métal.

3. Dispositif selon la revendication 1 ou 2, caractérisé en ce que la douille (7) a la forme d'un manchon et est fendue sur la totalité de sa longueur.

4. Dispositif selon la revendication 1 ou 2, caractérisé en ce que la douille (7) est constituée de deux moitiés, dont l'une est reliée au tube externe (3).

5. Dispositif selon l'une quelconque des revendications précédentes, caractérisé en ce que le dispositif comporte une ou, de préférence, plusieurs vis de réglage (10) qui sont disposées au niveau de l'extrémité externe (6) du tube externe et qui sont destinées à amener la douille (7) à coopérer avec le tube interne (4).
